# EUROPEAN PATENT SPECIFICATION

(11) **EP 4 294 593 B1**
(45) Date of publication and mention of the grant of the patent: **11.06.2025**
(21) Application number: 22706001.9
(22) Date of filing: 21.02.2022
(51) Int. Cl.: B23K 9/04, B23K 9/16, B23K 9/32

(54) **DEVICE AND METHOD FOR DIRECT ENERGY DEPOSITION ADDITIVE MANUFACTURING (DED)**
VORRICHTUNG UND VERFAHREN ZUR GENERATIVEN FERTIGUNG DURCH DIREKTE ENERGIEABSCHEIDUNG
DISPOSITIF ET PROCÉDÉ DE FABRICATION ADDITIVE PAR DÉPÔT DIRECT D'ÉNERGIE (DED)

(30) Priority: 22.02.2021 EP 21020086
(43) Date of publication of application: 27.12.2023
(73) Proprietor: Linde GmbH, 82049 Pullach (DE)
(72) Inventor: AMMANN, Thomas, 82049 Pullach (DE); HIBBITT, Ian, 82049 Pullach (DE); BAUER, Dominik, 82049 Pullach (DE); COROADO, Julio, 82049 Pullach (DE)
(74) Representative: Gellner, Bernd
(86) International application number: PCT/EP2022/025058
(87) International publication number: WO 2022/174983

(56) References cited:
- EP-A1- 2 194 765
- EP-A1- 3 147 047
- DE-A1- 102008 047 491
- US-A1- 2018 010 237

## Description

The present invention relates to a device for direct energy deposition (DED) additive manufacturing, in particular for wire-arc additive manufacturing (WAAM), and to a corresponding method for DED, in particular WAAM.

Direct Energy Deposition Additive Manufacturing is a process wherein material is added with simultaneous heat input. Wire Arc Additive Manufacturing (WAAM) is a particular DED method of 3d printing that relies on the deposition of metal from a wire feed device that is subsequently melted within an electric arc discharge. WAAM processes can be conducted by applying a metallic material layer by layer using e.g. established inert gas metal arc welding processes, resulting in a desired 3D structure.

US2018010237A1 discloses a chamber system for solid free form fabrication by wire arc additive manufacturing.

The high heat input during the DED or WAAM process creates a long waiting time between two layers and a limited deposition rate. The heat input needs to be precise in order to achieve a desired weld width and height. Excessive heat input leads to low weld height and large width, creating difficulties to generate the required shape of the component. Furthermore, with increasing numbers of weld seams on top of each other a lot of heat is generated in the already produced section. This can cause instabilities in the weld process or the desired contour cannot be created without waiting until the structure is cooled down.

As a second problem, DED or WAAM produces a lot of soot and smoke, that can be deposited on the weld seams. These residues may influence mechanical properties of the workpiece when they are melted into the next weld seam layer and may also influence the weld process e.g. the weld stability.

Thus, the problem to be solved by the present invention is to provide a device and a method for DED or WAAM that reduce the above-stated difficulties.

This problem is solved by a device for direct energy deposition additive manufacturing, in particular for wire-arc additive manufacturing, comprising a welding torch configured to generate an arc for generating a melt pool on a surface of a workpiece, and a wire feeder configured to feed a wire towards the melt pool to generate a weld seam on said surface, and an enclosure enclosing at least part of the workpiece and comprising a process atmosphere with a process gas, and a sucking device configured to suck in part of the process gas and thereafter to re-introduce the process gas into the process atmosphere, and which is characterized in that the enclosure comprises or consists of a flexible housing or a tent and in that the sucking device is connected to a buffer volume or a pressure stabilizing unit.

The invention also relates to a method for direct energy deposition additive manufacturing, in particular wire-arc additive manufacturing, of a workpiece layer by layer, wherein a melt pool is generated on a surface of the workpiece to be formed and a metal wire is fed towards the melt pool to generate a weld seam, wherein the melt pool is enclosed by an enclosure and a process atmosphere with a process gas is provided within the enclosure, and wherein part of the process gas is withdrawn from the process atmosphere and subsequently re-introduced into the process atmosphere, and which is characterized in that the enclosure comprises or consists of a flexible housing or a tent and in that the pressure within the enclosure is maintained at an over-pressure between 2 and 50 mbar, preferably between 2 and 25 mbar, preferably between 5 and 20 mbar.

Preferred embodiments of these aspects of the present invention are disclosed in the corresponding sub claims and are described below.

A Direct Energy Deposition (DED) method or a wire arc additive manufacturing (WAAM) process is carried out in a process atmosphere. Depending on the size, geometry and dimensions of the workpiece to be manufactured it is often not possible to manufacture the workpiece in a solid process chamber. On the other hand, in order to achieve desired material properties the additive manufacturing process should be carried out in a defined process atmosphere. Therefore, the invention proposes that at least a portion of the enclosure is flexible. The flexible portion of the enclosure allows to cover workpieces of different dimensions and forms. The enclosure may be in part solid and in part flexible. For example, the lower part of the enclosure could have a box-like design or only a solid ground plate whereas the upper part of the enclosure is flexible and formed like a tent. Further, the enclosure could be flexible with only some solid portions, for example a solid portion around a gas inlet or gas outlet port or a solid portion around a port for the welding torch. According to another embodiment the whole enclosure or a large portion of the enclosure or the largest part of the enclosure is made of a flexible material. In any case, the enclosure is made of a gas tight material so that a defined process atmosphere can be maintained within the enclosure.

According to the inventive process a workpiece is manufactured layer by layer, wherein a melt pool is generated on a surface of the workpiece to be formed and a metal wire is fed towards the melt pool to generate a weld seam. During these melting steps the process gas within the enclosure heats up quickly due to the high heat input by the welding torch. Excessive heat input leads to low weld height and large width, creating difficulties to generate the required shape of the component. Furthermore, with increasing numbers of weld seams on top of each other a lot of heat is generated in the already produced section. This can cause instabilities in the weld process.

According to the present invention, process gas is sucked out of the enclosure by a sucking device and re-introduced into the enclosure at a location close to the boundaries of the melt pool. Thereby, the heat exchange between the metal and the process gas will be considerably improved and the heat input from the welding torch during the arc-welding process will be transferred to the process gas. The waiting time between manufacturing of two successive layers can be reduced and the total deposition rate can be increased.

The process gas is blown towards the melt pool without disturbing the melt pool. This is preferably achieved by using a nozzle which is placed next to the welding torch. The process gas is sucked in from a location further away from the torch and returned to the process atmosphere through the nozzle to a location close to the welding point. Preferably, the process gas is withdrawn from the process atmosphere at a location where the gas movement is low and/or where the atmosphere is static.

Since the enclosure is at least in part flexible there is the risk that the flexible part of the enclosure comes into contact with hot parts of the workpiece or even with the welding arc or with the melt pool. Therefore, the process gas atmosphere within the enclosure is maintained at a slight over-pressure between 2 and 50 mbar, preferably between 2 and 25 mbar, preferably between 5 and 20 mbar. This overpressure guarantees that the enclosure does not collapse but is slightly inflated. In addition, the overpressure prevents that surrounding atmosphere enters the enclosure and contaminates the process gas atmosphere.

The slight overpressure is preferably achieved by means of a buffer volume or a pressure stabilizing unit provided in the re-circulation pipeline or re-circulation circuit with the sucking device. It is not sufficient to only control the flow of process gas re-introduced into the enclosure to be identical to the flow of process gas withdrawn from the enclosure by the sucking device. Since the enclosure is at least in part flexible the inner volume of the enclosure changes depending on the form of the enclosure. Therefore, it is necessary to provide a pressure control so that the pressure within the enclosure is always slightly higher than the pressure of the atmosphere surrounding the enclosure.

Particularly, according to an embodiment of the present invention, the welding torch is connected via a connecting structure to the nozzle, wherein particularly the welding torch is moveable along the workpiece together with the nozzle (e.g. along the respective weld seam) to generate a further weld seam on top of the previous weld seam. The sucking device could be a pump, a compressor or a similar device.

According to a preferred embodiment the enclosure is or comprises a flexible or solid housing or a tent. The material the enclosure is made of may comprise rubber, plastics, metals or another gastight, flexible material. The enclosure does not necessarily cover the total work piece to be manufactured. But it covers at least the welding spot and the melt pool where the metal is melted by the welding torch. Preferably, two or more upper layers of the work piece to be produced are also within the enclosure. Depending on the size of the workpiece even the whole work piece is covered by the enclosure.

Typical dimensions of the enclosure are a volume of 0,3 m³ to 1,5 m³. Since the enclosure is at least partly flexible its form varies. Typical extensions in x-, y- and z-direction (directions in space) are between 800mm and 1500 mm.

In a DED or WAAM process the material properties of the produced work piece depend on the gas composition of the process atmosphere. In many cases the oxygen level of the process atmosphere must not exceed a certain level. Therefore, it is preferred to have an inert process atmosphere or at least an atmosphere with a pre-defined maximum oxygen concentration within the enclosure. The process atmosphere may comprise one or more of the inert gases argon, nitrogen and /or helium. For example, the process atmosphere can be pure argon, pure helium or pure nitrogen or an argon-nitrogen mixture, an argon-helium mixture, a helium-nitrogen mixture or a mixture of argon, helium and nitrogen.

It has been found that under certain conditions, for example when titanium alloys such Ti64 or Ti-6Al-4V, are welded, the DED or WAAM process produces a lot of soot and smoke, that not only blackens the observation window of the enclosure, but also clogs any sensors or measuring systems. Therefore, in a preferred embodiment the sucking device is connected to a cleaning unit for cleaning the process gas prior to re-introduction into the process atmosphere. Soot, smoke or any other impurities are removed from the process gas before it is returned to the process atmosphere. Such cleaning of the process gas may for example be carried out in a cyclone or a similar device. The cleaning unit is preferably placed upstream of the sucking unit in order to clean the process gas before it contaminates the sucking unit.

Tests have shown that the process gas within the enclosure is heated up very quickly due to the high heat input from the welding torch. Depending on the heat input, the size of the enclosure and the gas circulation within the enclosure the temperature inside the enclosure might increase to 80°C or even higher. Therefore, it is preferred to provide a heat exchanger for cooling the process gas prior to re-introducing it into the process atmosphere. The process gas is sucked from the process atmosphere, cooled down in the heat exchanger and then returned to the process atmosphere. The heat exchange process may be controlled to cool down the process gas in a controlled manner in order to achieve a pre-defined process gas temperature or temperature range.

DED or WAAM equipment often comprises a robotic system for 3-dimensional moving of the welding torch. When the welding torch is moved inside the enclosure there is a risk that such movement causes pressure changes within the enclosure and/or inflates or deflates the enclosure when a flexible enclosure, such as a tent, is used. In order to keep the pressure constant it is preferred to connect the sucking device to a buffer volume. The volume of the buffer can be chosen such that it is large enough to compensate typical pressure changes of the process atmosphere. According to another embodiment a device for pressure stabilization is provided in the recirculation pipeline. Thus, the pressure of the process gas returned to the process atmosphere and the pressure of the process atmosphere itself will be kept constant.

Particularly, according to another embodiment, the nozzle is or can be tilted in a movement direction (i.e. the welding direction) of the welding torch or it can be tilted in a direction opposite the movement direction of the welding torch. Preferably, the nozzle is tilted in the direction opposite the movement direction. Particularly, this helps to avoid disturbances of the melt pool and of the arc welding process.

Preferably, in an embodiment, the nozzle is spaced apart from the welding torch by a distance that lies in the range from 10 mm to 200 mm, particularly in the range from 50 mm to 100 mm.

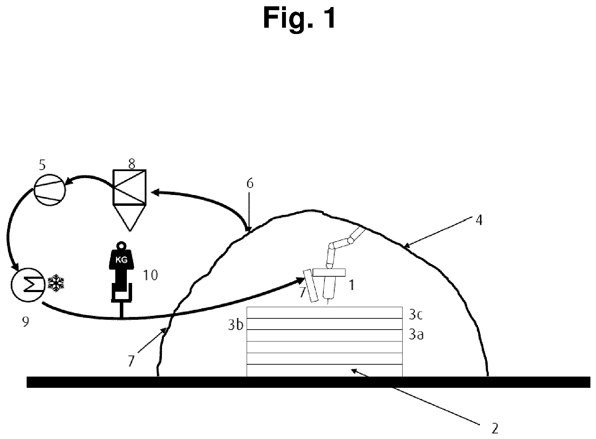

In the following, embodiments, further features, and advantages of the present invention shall be described with reference to the Figure, wherein
- Fig. 1: shows a schematical illustration of an embodiment of a device according to the present invention.

Fig. 1 shows an embodiment of a device for wire-arc additive manufacturing (WAAM) of a work piece according to the present invention.

According to Fig. 1 the device comprises a welding torch 1 configured to generate an arc for generating a melt pool on a surface of a workpiece 2 to be formed. A wire feeder is connected to the welding torch 1 and is configured to feed a metallic wire towards the melt pool in order to generate a weld seam upon the surface of the work piece. The wire feeder can also be a part of the welding torch 1. The device is used to form the workpiece 2 by stacking weld seams 3a, 3b, 3c layer by layer on top of one another as shown in Fig. 1.

An enclosure 4, which comprises at least a flexible portion made of rubber or another gastight flexible material, covers the work piece 2. Within the enclosure 4 an inert process atmosphere is provided. The process atmosphere consists of an inert gas, in particular of argon, helium, nitrogen or a mixture of two or all three of these gases.

Close to the walls of the enclosure 4 the process atmosphere is quite static, that means there is no or only very small gas movement. Due to the reduced gas movement the heat transport within the enclosure 4 is low and the heat introduced by the welding torch 1 is only insufficiently taken away from the work piece 2.

Therefore, a re-circulation pipeline is provided connecting a gas outlet port 6 of the enclosure with a nozzle 7 located within the enclosure 4 and close to the welding torch 1. A pump or compressor 5 is provided in the re-circulation circuit and the inlet of the pump or compressor 5 is connected to the gas outlet port 6 of the enclosure 4. The outlet of the pump or compressor 5 is connected to the nozzle 7. The pump or compressor 5 allows to suck process gas from the process atmosphere out of the enclosure 4 and to re-introduce the process gas via nozzle 7 at a point close to the melt pool.

It has been found that depending on the metal used and depending on the process conditions the WAAM process produces more or less soot and smoke. This soot and smoke may not only contaminate sensors and other equipment but also negatively affect the welding process. Therefore, the process gas recirculation circuit comprising the gas port 6, the pump or compressor 5 and the nozzle 7 and the connecting pipes further comprises a cleaning unit 8. The cleaning unit 8 is preferably placed upstream of the pump or compressor 5 so that the pump or compressor 5 is also protected from contamination. The cleaning unit 8 might be a filter or a cyclone in order to clean the process gas before it is re-entered into the enclosure 4.

The welding torch 1 introduces a considerable amount of energy and heat into the tent or flexible enclosure 4. This heat input heats up the process atmosphere in the enclosure 4 quickly. In order to cool down the recirculated process gas a cooling unit or a heat exchanger 9 is integrated into the process gas recirculation circuit. The cooling unit or heat exchanger 9 is preferably arranged downstream of the pump or compressor 5 to also absorb the compression heat generated by the pump or compressor 5.

Further, a weighted buffer volume 10 or another pressure stabilization device is provided in the process gas recirculation circuit. When the welding torch 1 is moving in the enclosure 4 it causes pressure variations which could inflate or deflate the enclosure 4. Further, the volume of the enclosure 4 variies with its form. The flexible portion of the enclosure 4 might even collapse and contact the hot workpiece or it might come too close to the welding spot. The weighted buffer volume 10 or the pressure stabilization device ensure that always the same pressure is applied to the process gas so that any pressure variations, for example caused by the moving welding torch 1, will be compensated. The pressure stabilization device preferably keeps the pressure within the enclosure slightly above the pressure of the surrounding atmosphere. This over pressure is preferably between 2 and 50 mbar, between 2 and 25 mbar, between 5 and 20 mbar or between 10 and 20 mbar.

The present invention provides the following advantages. Process gas is extracted from an area in the enclosure 4 where only low gas movement exists. This process gas is recirculated and re-introduced into the enclosure 4 at a location close to the welding torch 1 and to the melt pool where the welding torch 1 generates a lot of heat. The inventive gas recirculation circuit thereby considerably improves the convection within the enclosure 4. The workpiece 2 will cool down faster and the production speed can be increased.

In addition, the recirculated process gas is cooled down by a cooling unit 9 to better compensate the heat input from the welding torch 1. Preferably, the cooling rate of the cooling unit 9 is controlled so that the temperature within the enclosure 4 is maintained essentially constant.

The recirculation of process gas is further used to clean the process gas from any soot, smoke or other impurities. This is preferably accomplished by passing the recirculated process gas through a cleaning unit, such as a cyclone 8 or a filter.

The pressure within the enclosure is maintained at a slight overpressure by a buffer volume, and in particular a weighted buffer volume, or another pressure stabilizing unit located in the recirculation circuit. This ensures that the flexible enclosure or the flexible part of the enclosure will not collapse and not contact any hot parts within the enclosure, such as the melt pool, the work piece or the welding arc. Further, atmosphere from outside the enclosure cannot enter the enclosure and contaminate the process atmosphere.

## Claims

1. A device (1) for direct energy deposition additive manufacturing, in particular for wire-arc additive manufacturing, comprising:
- a welding torch (1) configured to generate an arc for generating a melt pool on a surface of a workpiece (2), and
- a wire feeder configured to feed a wire towards the melt pool to generate a weld seam on said surface, and
- an enclosure (4) which, in use, encloses at least part of the workpiece (2) and comprises a process atmosphere with a process gas,
- a sucking device (5) configured to suck part of the process gas out of the enclosure (4) and thereafter to re-introduce the process gas into the process atmosphere,
**characterized in that**
the enclosure (4) comprises or consists of a flexible housing or a tent and **in that** the sucking device (5) is connected to a buffer volume or a pressure stabilizing unit (10).

2. Device according to claim 1, **characterized in that** a nozzle (7) is provided for re-introducing the gas into the process atmosphere wherein the nozzle (7) is placed next to the welding torch (1).

3. Device according to any of the preceding claims, **characterized in that** the sucking device (5) is connected to a cleaning unit (8) for cleaning the process gas prior to re-introduction into the process atmosphere.

4. Device according to claim 4, **characterized in that** the cleaning unit (8) comprises a cyclone.

5. Device according to any of the preceding claims, **characterized in that** the sucking device (5) is connected to a heat exchanger or a cooling unit (9) for cooling the process gas prior to re-introduction into the process atmosphere.

6. Device according to any of the preceding claims, **characterized in that** the sucking device (5) comprises a pump or a compressor.

7. A method for direct energy deposition additive manufacturing, in particular wire-arc additive manufacturing, of a workpiece layer by layer (3a, 3b, 3c), wherein a melt pool is generated on a surface of the workpiece (2) to be formed and a metal wire is fed towards the melt pool to generate a weld seam, wherein the melt pool is enclosed by an enclosure and a process atmosphere with a process gas is provided within the enclosure, and wherein part of the process gas is withdrawn from the process atmosphere and subsequently re-introduced into the process atmosphere,
**characterized in that**
the enclosure (4) comprises or consists of a flexible housing or a tent and **in that** the pressure within the enclosure is maintained at an over-pressure between 2 and 50 mbar, preferably between 2 and 25 mbar, preferably between 5 and 20 mbar.

8. Method according to claim 7, **characterized in that** the process gas is withdrawn from the process atmosphere and passed out of the enclosure.

9. Method according to any of claims 7 or 8, **characterized in that** the process atmosphere comprises argon, nitrogen and/or helium.

10. Method according to any of claims 7 to 9, **characterized in that** the process gas is cleaned and/or cooled prior to being re-introduced into the process atmosphere.

## Patentansprüche

1. Vorrichtung (1) für eine additive Fertigung mittels direkter Energieabscheidung, insbesondere für eine additive Fertigung mittels Drahtlichtbogen, umfassend:
- einen Schweißbrenner (1), der konfiguriert ist, um einen Lichtbogen zum Erzeugen eines Schmelzbads auf einer Oberfläche eines Werkstücks (2) zu erzeugen, und
- einen Drahtzufuhrvorschub, der konfiguriert ist, um einen Draht in Richtung des Schmelzbads vorzuschieben, um eine Schweißnaht auf der Oberfläche zu erzeugen, und
- eine Umhüllung (4), die in Verwendung mindestens einen Teil des Werkstücks (2) umhüllt und Prozessatmosphäre mit einem Prozessgas umfasst,
- eine Absaugvorrichtung (5), die konfiguriert ist, um einen Teil des Prozessgases aus der Umhüllung (4) abzusaugen und das Prozessgas anschließend wieder in die Prozessatmosphäre einzuführen,
**dadurch gekennzeichnet, dass** die Umhüllung (4) ein flexibles Gehäuse oder ein Zelt umfasst oder daraus besteht und dass die Saugvorrichtung (5) mit einem Puffervolumen oder einer Druckstabilisierungseinheit (10) verbunden ist.

2. Vorrichtung nach Anspruch 1, **dadurch gekennzeichnet, dass** eine Düse (7) zum Wiedereinführen des Gases in die Prozessatmosphäre bereitgestellt ist, wobei die Düse (7) neben dem Schweißbrenner (1) platziert ist.

3. Vorrichtung nach einem der vorstehenden Ansprüche,
**dadurch gekennzeichnet, dass** die Absaugvorrichtung (5) mit einer Reinigungseinheit (8) zum Reinigen des Prozessgases vor dem Wiedereinführen in die Prozessatmosphäre verbunden ist.

4. Vorrichtung nach Anspruch 4, **dadurch gekennzeichnet, dass** die Reinigungseinheit (8) einen Zyklon umfasst.

5. Vorrichtung nach einem der vorstehenden Ansprüche,
**dadurch gekennzeichnet, dass** die Absaugvorrichtung (5) mit einem Wärmetauscher oder einer Kühleinheit (9) zum Kühlen des Prozessgases vor dem Wiedereinführen in die Prozessatmosphäre verbunden ist.

6. Vorrichtung nach einem der vorstehenden Ansprüche,
**dadurch gekennzeichnet, dass** die Saugvorrichtung (5) eine Pumpe oder einen Kompressor umfasst.

7. Verfahren zum schichtweisen (3a, 3b, 3c) additiven Fertigen eines Werkstücks mittels direkter Energieabscheidung, insbesondere additiven Fertigen mittels Drahtlichtbogen, wobei auf einer Oberfläche des zu formenden Werkstücks (2) ein Schmelzbad erzeugt wird und ein Metalldraht in Richtung des Schmelzbads geschoben wird, um eine Schweißnaht zu erzeugen, wobei das Schmelzbad durch eine Umhüllung umhüllt ist und innerhalb der Umhüllung eine Prozessatmosphäre mit einem Prozessgas bereitgestellt wird, und wobei ein Teil des Prozessgases aus der Prozessatmosphäre abgezogen und anschließend wieder in die Prozessatmosphäre eingeführt wird, **dadurch gekennzeichnet, dass** die Umhüllung (4) ein flexibles Gehäuse oder ein Zelt umfasst oder daraus besteht und dass der Druck innerhalb der Umhüllung auf einem Überdruck zwischen 2 und 50 mbar, vorzugsweise zwischen 2 und 25 mbar, vorzugsweise zwischen 5 und 20 mbar, gehalten wird.

8. Verfahren nach Anspruch 7, **dadurch gekennzeichnet, dass** das Prozessgas aus der Prozessatmosphäre abgezogen und aus der Umhüllung geleitet wird.

9. Verfahren nach einem der Ansprüche 7 oder 8,
**dadurch gekennzeichnet, dass** die Prozessatmosphäre Argon, Stickstoff und/oder Helium umfasst.

10. Verfahren nach einem der Ansprüche 7 bis 9,
**dadurch gekennzeichnet, dass** das Prozessgas gereinigt und/oder gekühlt wird, bevor es wieder in die Prozessatmosphäre eingeführt wird.

## Revendications

1. Dispositif (1) pour la fabrication additive par dépôt direct d'énergie, en particulier pour la fabrication additive par arc électrique, comprenant :
- une torche de soudage (1) conçue pour produire un arc afin de générer un bain de fusion sur une surface d'une pièce à usiner (2), et
- un dévidoir de fil conçu pour acheminer un fil vers le bain de fusion afin de générer un cordon de soudure sur ladite surface, et
- une enceinte (4) qui, en cours d'utilisation, entoure au moins une partie de la pièce à usiner (2) et comprend une atmosphère de traitement avec un gaz de traitement,
- un dispositif d'aspiration (5) conçu pour aspirer une partie du gaz de traitement hors de l'enceinte (4) et pour réintroduire ensuite le gaz de traitement dans l'atmosphère de traitement,
**caractérisé en ce que**
l'enceinte (4) comprend ou consiste en un boîtier flexible ou une tente et par le fait que le dispositif d'aspiration (5) est relié à un volume tampon ou à une unité de stabilisation de la pression (10).

2. Dispositif selon la revendication 1, **caractérisé en ce qu'**une buse (7) est prévue pour réintroduire le gaz dans l'atmosphère de traitement, dans lequel la buse (7) est placée à côté de la torche de soudage (1).

3. Dispositif selon l'une quelconque des revendications précédentes, **caractérisé en ce que** le dispositif d'aspiration (5) est relié à une unité de nettoyage (8) pour nettoyer le gaz de traitement avant sa réintroduction dans l'atmosphère de traitement.

4. Dispositif selon la revendication 4, **caractérisé en ce que** l'unité de nettoyage (8) comprend un cyclone.

5. Dispositif selon l'une quelconque des revendications précédentes,
**caractérisé en ce que** le dispositif d'aspiration (5) est relié à un échangeur de chaleur ou à une unité de refroidissement (9) pour refroidir le gaz de traitement avant sa réintroduction dans l'atmosphère de traitement.

6. Dispositif selon l'une quelconque des revendications précédentes,
**caractérisé en ce que** le dispositif d'aspiration (5) comprend une pompe ou un compresseur.

7. Procédé de fabrication additive par dépôt direct d'énergie, en particulier de fabrication additive par arc électrique, d'une pièce à usiner couche par couche (3a, 3b, 3c), dans lequel un bain de fusion est généré sur une surface de la pièce à usiner (2) à former et un fil métallique est acheminé vers le bain de fusion pour générer un cordon de soudure, dans lequel le bain de fusion est enfermé dans une enceinte et une atmosphère de traitement avec un gaz de traitement est fournie à l'intérieur de l'enceinte, et dans lequel une partie du gaz de traitement est retirée de l'atmosphère de traitement et ensuite réintroduite dans l'atmosphère de traitement,
**caractérisé en ce que**
l'enceinte (4) comprend ou consiste en un boîtier flexible ou une tente et par le fait que la pression à l'intérieur de l'enceinte est maintenue à une surpression comprise entre 2 et 50 mbar, de préférence entre 2 et 25 mbar, de préférence entre 5 et 20 mbar.

8. Procédé selon la revendication 7, **caractérisé en ce que** le gaz de traitement est retiré de l'atmosphère de traitement et évacué hors de l'enceinte.

9. Procédé selon l'une quelconque des revendications 7 ou 8,
**caractérisé en ce que** l'atmosphère de traitement comprend de l'argon, de l'azote et/ou de l'hélium.

10. Procédé selon l'une quelconque des revendications 7 à 9,
**caractérisé en ce que** le gaz de traitement est nettoyé et/ou refroidi avant d'être réintroduit dans l'atmosphère de traitement.
